# EUROPÄISCHE PATENTSCHRIFT

(11) **EP 3 921 212 B1**
(45) Veröffentlichungstag und Bekanntmachung des Hinweises auf die Patenterteilung: **27.11.2024**
(21) Anmeldenummer: 20701961.3
(22) Anmeldetag: 22.01.2020
(51) Int. Cl.: B60T 13/66, B60T 17/22

(54) **BREMSSTEUERGERÄTEANORDNUNG UND VERFAHREN ZUM STEUERN EINER BREMSSTEUERGERÄTEANORDNUNG EINER BREMSE FÜR SCHIENENFAHRZEUGE**
ASSEMBLY OF BRAKE CONTROL DEVICES AND METHOD FOR CONTROLLING AN ASSEMBLY OF BRAKE CONTROL DEVICES OF A BRAKE FOR RAIL VEHICLES
ENSEMBLE D'APPAREILS DE COMMANDE DE FREINAGE ET PROCÉDÉ POUR COMMANDER UN ENSEMBLE D'APPAREILS DE COMMANDE DE FREINAGE U'UN FREIN POUR VÉHICULES FERROVIAIRES

(30) Priorität: 08.02.2019 DE 102019103179
(43) Veröffentlichungstag der Anmeldung: 15.12.2021
(73) Patentinhaber: KNORR-BREMSE Systeme für Schienenfahrzeuge GmbH, 80809 München (DE)
(72) Erfinder: GRÄBER, Johannes, 80639 München (DE); HELLER, Jonas, 81541 München (DE); CORDES, Matthias, 85354 Freising (DE); GWILDIES, Martin, 80636 München (DE); WAGNER, Martin, 81827 München (DE)
(86) Internationale Anmeldenummer: PCT/EP2020/051483
(87) Internationale Veröffentlichungsnummer: WO 2020/160902

(56) Entgegenhaltungen:
- WO-A2-00/24625

## Beschreibung

Die Erfindung betrifft eine Bremssteuergeräteanordnung einer Bremse für Schienenfahrzeuge nach dem Oberbegriff des Anspruchs 1. Die Erfindung bezieht sich auch auf ein Verfahren zum Steuern einer Bremssteuergeräteanordnung.

Eine übliche Bremse weist ein Bremssteuergerät auf. Bremssteuergeräte der Wagen/Fahrzeuge sind in vielen Ausführungen bekannt und steuern eine Füllung von Hilfs- bzw. Vorratsluftbehältern und bilden nach Maßgabe des Druckes in der Hauptluftleitung (HL) oder eines übermittelten Sollwertes einen Vorsteuer- bzw. Bremszylinderdruck.

Eine übliche Bremse für Schienenfahrzeuge, z.B. für einen Zug bzw. Triebzug wird derzeit entweder über eine Hauptluftleitung (HL) als so genannte "klassische HL-Steuerung", über zwei Leitungen, d.h. über eine Hauptluftleitung (HL) und eine Hauptluftbehälterleitung (HBL) bei elektro-pneumatischen Systemen (ep-Systeme), oder über eine Hauptluftbehälterleitung (HBL) bei direkten ep-Systemen ohne Rückfallebene angesteuert.

Bei bekannten Systemen mit elektro-pneumatischer Bremse wird für eine pneumatische Rückfallebene immer eine zweite Luftleitung benötigt.

Aus der WO 00/24625 A2 ist ein Bremssystem für Schienenfahrzeuge bekannt, das eine Hauptluftbehälterleitung aufweist, die von einer Drucklufterzeugungseinrichtung gespeist wird. Jedem Drehgestell des Schienenfahrzeugs wird hierbei wenigstens eine Druckluftleistung zugeführt, welche über beispielsweise ein Absperrventil, ein Rückschlagventil und einen Druckluftbehälter mit der Hauptluftbehälterleitung oder direkt mit dieser verbunden ist. Die jeweilige Druckluftleitung speist hierbei beispielsweise die Betriebsbremsventile zur Beaufschlagung von Bremsen des Drehgestells oder eine Steuereinheit für eine Federspeicherbremse und/oder weitere Steuereinheiten für weitere Hilfsaggregate.

Die Ansteuerung der jeweiligen Komponenten erfolgt hierbei über wenigstens eine lokale, elektronische Bremssteuereinheit.

Die Aufgabe der Erfindung besteht darin, eine verbesserte Bremssteuergeräteanordnung für eine Bremse für Schienenfahrzeuge und ein Verfahren zum Steuern einer Bremssteuergeräteanordnung zu schaffen.

Die Aufgabe wird durch die Gegenstände der Ansprüche 1 und 14 gelöst.

Ein Erfindungsgedanke besteht darin, eine direkte 1-Leitungs-ep-Bremse mit einer Rückfallebene als "klassische HL-Steuerung" zu kombinieren. Mit anderen Worten, in einem Schienenfahrzeug wird eine direkte Bremssystemsteuerung mit einem klassischen Steuerventil als Rückfallebene realisiert, wobei trotzdem nur eine durchgehende Luftleitung anstelle von zwei Luftleitungen durch den Zug benötigt wird.

Eine erfindungsgemäße Bremssteuergeräteanordnung für Schienenfahrzeuge umfasst eine Luftleitung, ein erstes Bremssteuergerät und mit mindestens einem Luftbehälter. Die Bremssteuergeräteanordnung weist zudem ein zweites Bremssteuergerät, ein Druckbegrenzungsventil und ein Schaltventil auf. Das zweite Bremssteuergerät kommuniziert mit dem ersten Bremssteuergerät.

Die Luftleitung ist in einer ersten Betriebsstellung der Bremssteuergeräteanordnung als Hauptluftleitung mit einem ersten Druck von ≤ 5 bar betrieben, wenn das zweite Bremssteuergerät mit der Luftleitung durch das ausgeschaltete Schaltventil verbunden ist. Dabei ist das erste Bremssteuergerät durch das zweite Bremssteuergerät derart gesteuert, dass eine klassische HL-Steuerung mit dem zweiten Bremssteuergerät gebildet ist.

Die Luftleitung ist zudem in einer zweiten Betriebsstellung der Bremssteuergeräteanordnung als Hauptluftbehälterleitung mit einem zweiten, konstanten Druck von ca. 10 bar betrieben, wenn die Bremssteuergeräteanordnung aus der ersten Betriebsstellung in die zweite Betriebsstellung durch das eingeschaltete Schaltventil verstellt ist, wobei die Verbindung des zweiten Bremssteuergerätes mit der Luftleitung unterbrochen und das zweite Bremssteuergerät über das Druckbegrenzungsventil mit dem Luftbehälter verbunden ist, und wobei das erste Bremssteuergerät mit der Luftleitung kommuniziert und eine direkte ep-Bremsensteuerung ausführt.

Die Bremssteuergeräteanordnung ist zudem aus der zweiten Betriebsstellung zurück in die erste Betriebsstellung durch das ausgeschaltete Schaltventil verstellbar, wobei die Luftleitung wider in der ersten Betriebsstellung der Bremssteuergeräteanordnung als Hauptluftleitung mit dem ersten Druck von ≤ 5 bar betrieben ist.

Mit dieser Anordnung bzw. Verschaltung und Kommunikation des ersten Bremssteuergeräts mit einem zweiten Bremssteuergerät und einem Schaltventil ergibt sich der Vorteil, dass eine direkte ep-Bremse ohne Verzicht auf deren Vorteile verwendet werden kann, wobei auf eine zweite Luftleitung verzichtet werden kann.

Ein erfindungsgemäßes Verfahren zum Steuern einer Bremssteuergeräteanordnung einer Bremse für Schienenfahrzeuge mit einer Luftleitung, wobei die Bremssteuergeräteanordnung ein erstes Bremssteuergerät, ein zweites Bremssteuergerät, ein Druckbegrenzungsventil, ein Schaltventil und mindestens einen Luftbehälter aufweist, umfasst die Verfahrensschritte (110) Betreiben der Luftleitung in einer ersten Betriebsstellung der Bremssteuergeräteanordnung als Hauptluftleitung (HL) mit einem ersten Druck (p_{HL}) von ≤ 5 bar, Verbinden des zweiten Bremssteuergerätes mit der Luftleitung durch Ausschalten des Schaltventils, und Steuern des ersten Bremssteuergerätes durch das zweite Bremssteuergerät derart, dass eine klassische HL-Steuerung mit dem zweiten Bremssteuergerät ausgeführt wird; (120) Betreiben der Luftleitung in einer zweiten Betriebsstellung der Bremssteuergeräteanordnung als Hauptluftbehälterleitung (HBL) mit einem zweiten, konstanten Druck (p_{HBL}) von ca. 10 bar, Verstellen der Bremssteuergeräteanordnung aus der ersten Betriebsstellung in die zweite Betriebsstellung durch Einschalten des Schaltventils, wobei die Verbindung des zweiten Bremssteuergerätes mit der Luftleitung unterbrochen wird und das zweite Bremssteuergerät über das Druckbegrenzungsventil mit dem Luftbehälter verbunden wird, und wobei das erste Bremssteuergerät mit der Luftleitung kommuniziert und eine direkte ep-Bremsensteuerung ausführt; (130) Verstellen der Bremssteuergeräteanordnung aus der zweiten Betriebsstellung zurück in die erste Betriebsstellung durch Ausschalten des Schaltventils, wobei wieder ein Betreiben der Luftleitung in der ersten Betriebsstellung der Bremssteuergeräteanordnung als Hauptluftleitung (HL) mit dem ersten Druck (p_{HL}) von ≤ 5 bar erfolgt.

Mit diesem Verfahren kann eine einfache vorteilhafte Steuerung der Bremssteuergeräteanordnung ermöglicht werden.

Vorteilhafte Weiterbildungen der Erfindung sind durch die Unteransprüche angegeben.

Von besonderem Vorteil ist es, wenn das erste Bremssteuergerät als eine direkte ep-Bremssteuereinheit und das zweite Bremssteuergerät als ein klassisches UIC-Steuerventil ausgebildet ist, da in diesem Fall bewährte Funktionseinheiten verwendet werden können.

Hierzu ist es in einer Ausführung vorteilhaft, wenn das zweite Bremssteuergerät mit dem ersten Bremssteuergerät über eine Leitung verbunden ist, über welche das zweite Bremssteuergerät mit dem ersten Bremssteuergerät pneumatisch oder/und elektrisch kommuniziert. Eine pneumatische Kommunikation kann z.B. mittels eines Steuerdruckes oder mehrerer ausgeführt werden, wobei eine elektrische Kommunikation ein elektrisches analoges oder/und digitales Signal sein kann.

In einer weiteren Ausführung ist das zweite Bremssteuergerät mit Arbeitsanschlüssen des Schaltventils und mit dem Druckbegrenzungsventil verbunden. Dies ergibt eine einfache Steuerung für das zweite Bremssteuergerät.

Dabei ist es vorgesehen, dass das Schaltventil mit einem Eingangsanschluss mit der Luftleitung verbunden ist. Damit wird eine vorteilhafte schaltbare Verbindung des zweiten Bremssteuergeräts mit der Luftleitung ermöglicht.

Es ist zudem vorteilhaft, wenn die Bremssteuergeräteanordnung aus einer ersten Betriebsstellung, in welcher die Luftleitung mit einem ersten Druck (p_{HL}) betrieben wird, in eine zweite Betriebsstellung, in welcher die Luftleitung mit einem zweiten Druck (p_{HBL}) betrieben wird, der zu dem ersten Druck unterschiedlich ist, mittels des Schaltventils verstellbar ist. Die einzige Luftleitung wird je nach Betriebszustand vom führenden Fahrzeug als "klassische" Hauptluftleitung (HL) als Rückfallebene mit einem ersten Druck p_{HL} von ≤ 5 bar oder als Hauptluftbehälterleitung (HBL) mit einem zweiten, konstanten Druck p_{HBL} von ca. 10 bar betrieben. Abhängig von diesen Druckwerten kann die Bremssteuergeräteanordnung vorteilhaft aus einer ersten Betriebsstellung in eine zweite Betriebsstellung und zurück von dem Schaltventil verstellt werden.

In einer Ausführung ist vorgesehen, dass das Schaltventil in der zweiten Betriebsstellung eingeschaltet ist, und dass das Schaltventil in der ersten Betriebsstellung ausgeschaltet ist. Auf diese Weise ergibt sich der Vorteil, dass das Schaltventil in der ersten Betriebsstellung in der Rückfallebene in seiner Ausgangsstellung steht, z.B. als Magnetventil stromlos ist.

In einer weiteren Ausführung ist in der zweiten Betriebsstellung ein HL-Eingangsdruck-Anschluss des zweiten Bremssteuergeräts über die Arbeitsanschlüsse des Schaltventils mit einem Druck beaufschlagt, wobei das zweite Bremssteuergerät inaktiv ist. Dabei ist besonders vorteilhaft, dass das zweite Bremssteuergerät auch in diesem inaktiven Betrieb, d.h. in der zweiten Betriebsstellung, wenn die Funktion der direkten ep-Bremse über das erste Bremssteuergerät realisiert ist, immer mit Druck beaufschlagt wird.

Dies kann z.B. in einer weiteren Ausführung dadurch ausgeführt werden, indem der HL-Eingangsdruck-Anschluss des zweiten Bremssteuergeräts in der zweiten Betriebsstellung über das Druckbegrenzungsventil mit dem Luftbehälter verbunden ist. Damit ergibt sich der Vorteil, dass das zweite Bremssteuergerät aus einer Rückfallebene jederzeit sofort einsetzbar ist.

Es ist in einer weiteren Ausführung vorgesehen, dass in der ersten Betriebsstellung der HL-Eingangsdruck-Anschluss des zweiten Bremssteuergeräts über die Arbeitsanschlüsse des Schaltventils mit der Luftleitung verbunden ist, wobei das zweite Bremssteuergerät aktiv ist.

Eine Lastkorrektur sowohl in der ersten als auch zweiten Betriebsstellung findet jeweils parallel durch einen jeweiligen T-Druck-Anschluss sowohl in dem ersten als auch in dem zweiten Bremssteuergerät statt.

Das Schaltventil kann in einer Ausführung einen elektromagnetischen Antrieb aufweisen. Alternativ kann das Schaltventil einen pneumatischen Antrieb aufweisen. Derartige Schaltventile sind vorteilhaft marktüblich und mit hohem Qualitätsstandard kostengünstig verfügbar.

Es ist zudem vorteilhaft, wenn das Schaltventil ein 3/2-Wege-Ventil ist, da dies ein kostengünstiges Standardbauteil mit hoher Qualität ist.

In einer Ausführung kann die Bremse eine Güterwagenbremse sein. Dies ist vorteilhaft, da trotz einer einzigen Luftleitung die Vorteile einer direkten ep-Bremse genutzt werden können.

Es ist zudem vorteilhaft, dass die Bremse auch eine Reisezugwagenbremse sein kann, da sich so ein Einsatzbereich vergrößert.

In einer noch weiteren Ausführung ist das Schaltventil in Ausführung als Magnetventil von einer Lokomotive oder einem Triebfahrzeug direkt über eine separate Steuerleitung oder/und über eine Busleitung über eine Schnittstelle oder/und über die Busleitung über das erste Bremssteuergerät angesteuert. Hiermit werden vorteilhafte unterschiedliche Ansteuerungsmöglichkeiten realisiert.

Alternativ oder zusätzlich ist es auch möglich, dass das Schaltventil in Ausführung als Magnetventil von dem ersten Bremssteuergerät, welches mit einem mit der Luftleitung kommunizierenden Drucksensor verbunden ist, in Abhängigkeit von dem aktuellen Druck der Luftleitung angesteuert ist. Damit kann auf eine zusätzliche durchgehende Steuerleitung verzichtet werden.

Ein Ausführungsbeispiel der Erfindung wird nachfolgend anhand der beigefügten Zeichnungen beschrieben.

Es zeigen:
- Figur 1-2: schematische Blockschaltbilder eines Ausführungsbeispiels einer erfindungsgemäßen Bremssteuergeräteanordnung in unterschiedlichen Betriebsstellungen;
- Figur 3: ein schematisches Blockschaltbild einer Variation des Ausführungsbeispiels nach Figur 1-2;
- Figur 4: ein schematisches Blockschaltbild eines Schaltventils;
- Figur 5: ein schematisches Blockschaltbild des Ausführungsbeispiels nach Figur 1-2 mit unterschiedlichen Ansteuerungen; und
- Figur 6: ein schematisches Flussdiagramm eines erfindungsgemäßen Verfahrens zum Steuern der Bremssteuergeräteanordnung nach Figur 1-2.

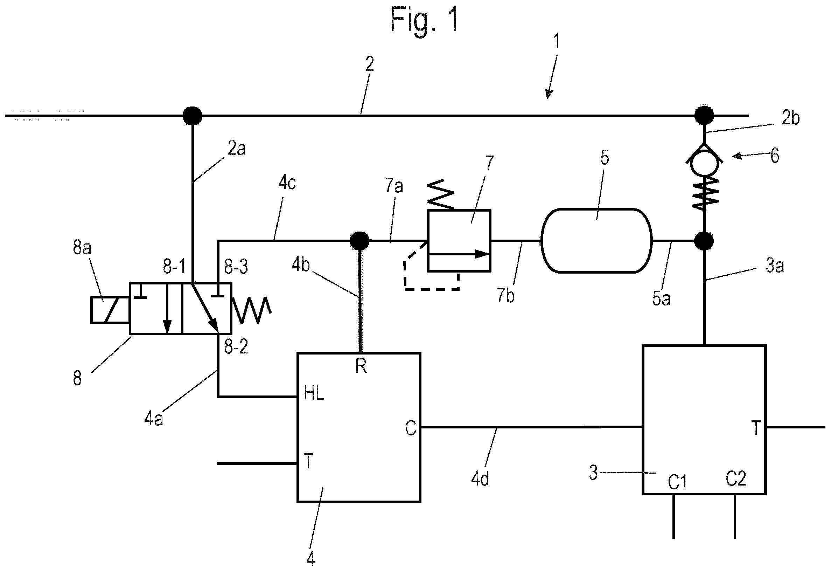

**Figur 1-2** zeigen schematische Blockschaltbilder eines Ausführungsbeispiels einer erfindungsgemäßen Bremssteuergeräteanordnung 1 in unterschiedlichen Betriebsstellungen.

In dem gezeigten Beispiel ist eine Bremse für Güterwagen mit einer Luftleitung 2 und einem Luftbehälter 5 schematisch dargestellt. Weitere Komponenten, wie z.B. Bremszylinder usw., sind nicht gezeigt.

Die Bremssteuergeräteanordnung 1 umfasst ein erstes Bremssteuergerät 3, ein zweites Bremssteuergerät 4, mindestens einen Luftbehälter 5, ein Druckbegrenzungsventil 7 und ein Schaltventil 8.

Das erste Bremssteuergerät 3 ist über eine Leitung 3a über ein Rückschlagventil 6 und eine weitere Leitung 2b mit der Luftleitung 2 verbunden. Zudem ist der Luftbehälter 5 mit einer Leitung 5a an der Leitung 3a des ersten Bremssteuergeräts 3 angeschlossen.

Das erste Bremssteuergerät 3 weist zwei Ausgangsanschlüsse C1, C2 zur Ansteuerung von Bremszylindern auf, worauf hier nicht weiter eingegangen wird.

Das zweite Bremssteuergerät 4 ist mit seinem HL-Eingangsdruck-Anschluss über eine erste Leitung 4a mit einem Arbeitsanschluss 8-2 des Schaltventils 8 verbunden. Eine zweite Leitung 4b verbindet den R-Anschluss des zweiten Bremssteuergeräts 4 mit einer dritten Leitung 4c des zweiten Bremssteuergeräts 4, welche mit einem Arbeitsanschluss 8-3 des Schaltventils 8 verbunden ist.

Eine vierte Leitung 4d verbindet den C-Anschluss des zweiten Bremssteuergeräts 4 mit dem ersten Bremssteuergerät 3.

Ein Druckbegrenzungsventil 7 ist über eine Leitung 7a mit den Leitungen 4b und 4c des zweiten Bremssteuergeräts 4 verbunden. Das Druckbegrenzungsventil 7 ist zudem über eine weitere Leitung 7b an dem Luftbehälter 5 angeschlossen.

Das Schaltventil 8 ist in dem gezeigten Beispiel als ein 3/2-Wege-Ventil mit einem elektromagnetischen Antrieb 8a ("Magnetventil") ausgebildet. Es kann auch ein pneumatisch schaltbares Ventil sein. Ein Eingangsanschluss 8-1 des Schaltventils 8 kommuniziert über eine Leitung 2a mit der Luftleitung 2.

Mittels des Schaltventils 8 ist es möglich, die Bremssteuergeräteanordnung 1 aus der ersten Betriebsstellung in eine zweite Betriebsstellung, die unten noch erläutert wird, und zurück zu verstellen.

**Figur 1** zeigt die erste Betriebsstellung, die auch als Rückfallebene bezeichnet wird. In der ersten Betriebsstellung wird die Luftleitung 2 als eine so genannte Hauptluftleitung (HL) mit einem Druck (p_{HL}) von ≤ 5 bar betrieben.

Damit entspricht die erste Betriebsstellung einer so genannten klassischen HL-Steuerung, die mit dem zweiten Bremssteuergerät 4 ausgeführt wird.

In der ersten Betriebsstellung ist das Schaltventil 8 mittels des Antriebs 8a ausgeschaltet, d.h. stromlos. Dabei ist der Eingangsanschluss 8-1 mit dem Arbeitsanschluss 8-2 verbunden.

Auf diese Weise kommuniziert in der Rückfallebene nur das zweite Bremssteuergerät 4 mit seinem HL-Anschluss über die Leitung 4a, die Schaltventilanschlüsse 8-2 und 8-1 und somit über die Leitung 2a mit der Luftleitung 2. Mittels der Leitung 4d ist das zweite Bremssteuergerät 4 mit dem ersten Bremssteuergerät 3 gekoppelt und steuert somit das erste Bremssteuergerät 3 in der ersten Betriebsstellung. Mit anderen Worten, das zweite Bremssteuergerät 4 kommuniziert mit dem ersten Bremssteuergerät 3 über die Leitung 4d. Dies kann pneumatisch mittels eines Steuerdruckes oder mehrerer oder/und elektrisch mittels eines oder mehrerer elektrischer Signale erfolgen. Die elektrischen Signale können analoge oder/und digitale elektrische Signale sein.

Das Schaltventil 8 weist eine Sicherheitsebene "low-aktiv" auf. Im stromlosen Zustand, also in der ersten Betriebsstellung, ist es aktiv, d.h. die Arbeitsanschlüsse 8-1 und 8-2 sind verbunden, wobei das zweite Bremssteuergerät 4 aktiviert ist.

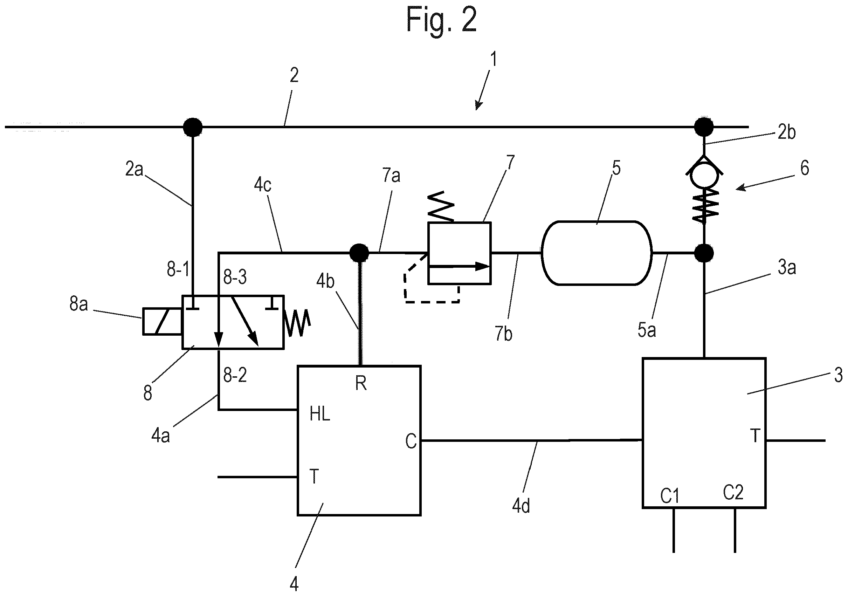

In der in **Figur 2** gezeigten zweiten Betriebsstellung wird die Luftleitung 2 im Gegensatz zu der ersten Betriebsstellung als eine so genannte Hauptluftbehälterleitung (HBL) mit einem Druck (p_{HBL}) von ca. 10 bar betrieben.

Damit entspricht die zweite Betriebsstellung einer Arbeitsstellung einer so genannten 1-Leitungs-ep(elektro-pneumatischen)-Bremse, wobei eine direkte ep-Bremsensteuerung mit dem ersten Bremssteuergerät 3 ausgeführt wird. Die elektrische Ansteuerung des Bremssteuergeräts 3 im Fall der direkten ep-Bremsensteuerung ist bekannt und wird nicht weiter gezeigt.

In der zweiten Betriebsstellung gemäß Figur 2 im Gegensatz zu der ersten Betriebsstellung nach Figur 1 ist das Schaltventil 8 mittels des Antriebs 8a eingeschaltet. Das heißt, dass der Eingangsanschluss 8-1 geschlossen ist und die Arbeitsanschlüsse 8-2 und 8-3 verbunden sind.

Da der Eingangsanschluss 1 geschlossen ist, kommuniziert nur das erste Bremssteuergerät 3 über seine Leitung 3a und das Rückschlagventil 6 mit der Luftleitung 2.

Das zweite Bremssteuergerät 4 ist in einem inaktiven Betrieb, wobei der HL-Eingangsanschluss über die Leitung 4a, die verbundenen Arbeitsanschlüsse 8-2, 8-3 des Schaltventils 8, die Leitung 4b mit dem R-Anschluss des zweiten Bremssteuergeräts 4 und über das Druckbegrenzungsventil 7 mit dem Luftbehälter 5 verbunden ist. Auf diese Weise ist das zweite Bremssteuergerät 4 auch in seinem inaktiven Betrieb immer mit Druck beaufschlagt. Dieser Druck entspricht in diesem Fall dem Behälterdruck des Luftbehälters 5.

Daraus ergibt sich der Vorteil, dass in der zweiten Betriebsstellung das zweite Bremssteuergerät 4 aus der Rückfallebene sofort einsetzbar ist.

Auf diese Weise kann mit der erfindungsgemäßen Bremssteuergeräteanordnung 1 auf eine zweite Luftleitung, die in üblichen Systemen mit ep-Bremse immer erforderlich ist, verzichtet werden, ohne die Vorteile einer direkten ep-Bremse aufzugeben.

Eine Lastkorrektur findet sowohl in der ersten Betriebsstellung als auch in der zweiten Betriebsstellung durch den jeweiligen T-Druck-Anschluss im ersten Bremssteuergerät 3 als auch im zweiten Bremssteuergerät 4 statt.

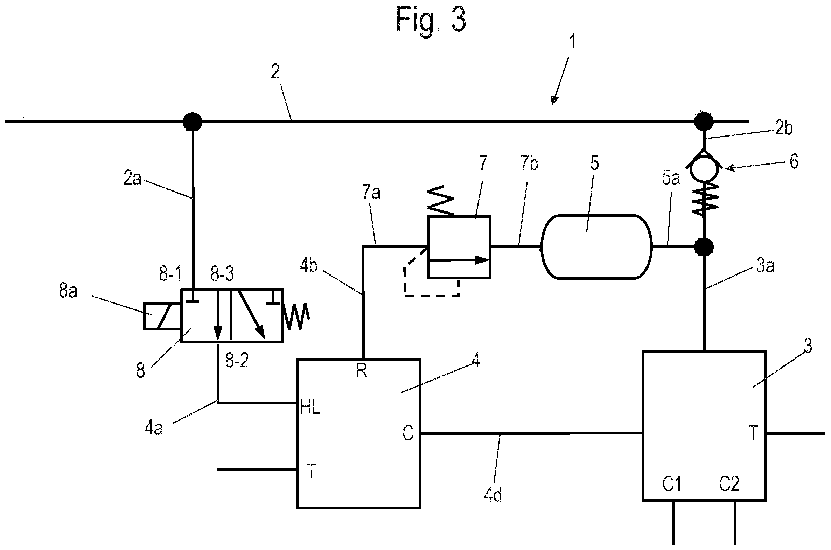

**Figur 3** stellt ein schematisches Blockschaltbild einer Variation des Ausführungsbeispiels nach Figur 1-2 dar.

Figur 3 zeigt die zweite Betriebsstellung der Bremssteuergeräteanordnung 1 in einer Variation, in welcher der Arbeitsanschluss 8-3 des Schaltventils 8 weder mit der Leitung 4b des Schaltventils 8 noch mit dem Druckbegrenzungsventil 7 verbunden ist. In diesem Fall kann der Arbeitsanschluss 8-3 mit einer nicht gezeigten anderen Druckquelle verbunden sein, um in dieser zweiten Betriebsstellung das zweite Bremssteuergerät 4 im inaktiven Zustand mit einem Druck an dem HL-Anschluss des zweiten Bremssteuergerät 4 zu versorgen, damit das zweite Bremssteuergerät 4 aus der Rückfallebene jederzeit sofort einsetzbar ist. Der dazu erforderliche Druck kann hier aus einer nicht gezeigten, separaten und/oder zusätzlichen Druckquelle entnommen werden, z.B. aus einem Hilfsluftbehälter.

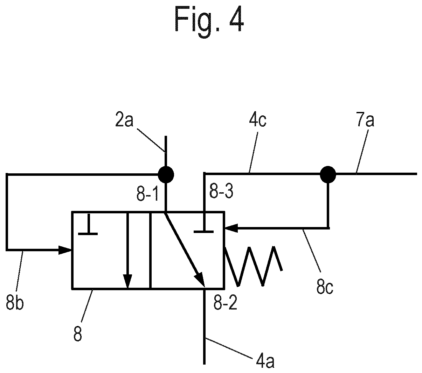

In **Figur 4** ist ein schematisches Blockschaltbild des Schaltventils 8 als ein pneumatisch schaltbares Schaltventil 8 gezeigt.

Der pneumatische Antriebsanschluss des Schaltventils 8 ist über eine Leitung 8b mit der Leitung 2a (und so mit der Luftleitung 2, siehe Figuren 1-3) verbunden. Ein weiterer Antriebsanschluss ist über eine weitere Leitung 8c an der Leitung 7a des Druckbegrenzungsventils 7, über dieses an den Luftbehälter 5 angeschlossen.

In der ersten Betriebsstellung ist das pneumatisch schaltbare Schaltventil 8 über die Leitung 8b und die Leitung 2a mit dem Druck (p_{HL}) von ≤ 5 bar der Luftleitung 2 (nun als HL betrieben) gegenüber dem Druck des Luftbehälters von 5 bar in der Leitung 8c beaufschlagt und ausgeschaltet. Die Arbeitsanschlüsse 8-1 und 8-2 des Schaltventils 8 sind dann verbunden.

In der zweiten Betriebsstellung ist das pneumatisch schaltbare Schaltventil 8 über die Leitung 8b und die Leitung 2a mit dem Druck (p_{HBL}) von ca. 10 bar der als HBL betriebenen Luftleitung 2 gegenüber dem Druck des Luftbehälters 5 von 5 bar in der Leitung 8c beaufschlagt und eingeschaltet. In diesem eingeschalteten Zustand sind die Arbeitsanschlüsse 8-2 und 8-3 wie in Figur 1 dargestellt verbunden.

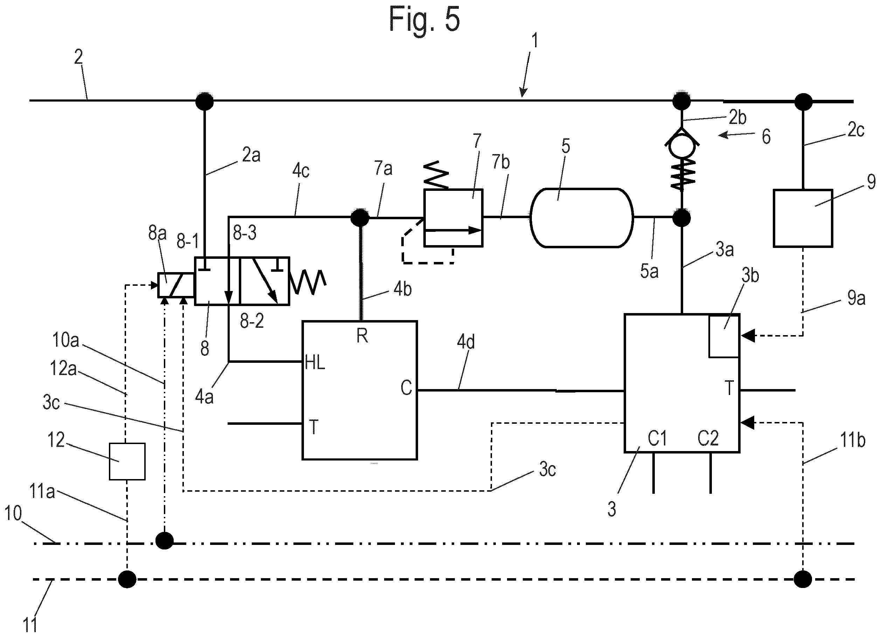

In **Figur 5** ist ein schematisches Blockschaltbild des Ausführungsbeispiels nach Figur 1-2 mit unterschiedlichen Ansteuerungen des elektromagnetischen Antriebs 8a des Schaltventils 8 dargestellt.

Figur 5 zeigt die Bremssteuergeräteanordnung 1 in der zweiten Betriebsstellung, in welcher das zweite Bremssteuergerät 4 inaktiv ist (siehe Figur 2). Die unterschiedlichen Konfigurationen der Ansteuerung des elektromagnetischen Antriebs 8a des Schaltventils 8 sind gemeinsam gezeigt, wobei jedoch nur eine von diesen Konfigurationen je nach Einsatzfall verwendet wird.

Das Schaltventil 8 in Ausführung als Magnetventil mit dem Antrieb 8a kann von einer führenden Einheit (z.B. Lokomotive bzw. Triebfahrzeug), der ein Zug mit Güterwagen mit der oben beschriebenen Güterwagenbremse mit der erfindungsgemäßen Bremssteuergeräteanordnung 1 zugeordnet ist, direkt über eine (durch alle Wagen des Zugs durchgehende) separate Steuerleitung 10 über einen Anschluss 10a angesteuert werden. Es ist möglich, dass auch ein Zug mit Reisezugwagen oder ein kombinierter Zug mit Reisezugwagen und Güterwagen (z.B. Autoreisezug) mit der erfindungsgemäßen Bremssteuergeräteanordnung 1 ausgestattet werden kann.

Es ist auch möglich, dass die Ansteuerung über ein Bussignal von der führenden Einheit auf einer durchgehenden Busleitung 11 erfolgt, wobei die Busleitung 11 über eine Anschlussleitung 11a mit einer Schnittstelle 12 gekoppelt ist, die das Ansteuersignal der Busleitung 11 in ein passendes elektrisches Signal für den Antrieb 8a des Schaltventils 8 umwandelt und über eine Anschlussleitung 12a zur Verfügung stellt.

Das Ansteuersignal von der führenden Einheit kann auch über die "normale" Busleitung 11 über eine Anschlussleitung 11b zunächst an das erste Bremssteuergerät 3 geleitet werden, das eine eigene Schnittstelle besitzt und ein entsprechendes Ansteuersignal für den Antrieb 8a des Schaltventils 8 über eine Steuerleitung 3c dem Antrieb 8a zuleitet.

Andererseits kann das erste Bremssteuergerät 3 das elektrische Signal zur Ansteuerung des Antriebs 8a des Schaltventils 8 auch durch einen Drucksensor 9 generiert werden. Dabei ist der Drucksensor 9 über eine Leitung 2c mit der Luftleitung 2 verbunden und liefert als HL-Drucksensor 9 ein entsprechendes Signal, welches dem aktuellen Druck der Luftleitung 2 entspricht, über eine Signalleitung 9a an eine Verarbeitungseinheit 3b des ersten Bremssteuergeräts 3. Die Verarbeitungseinheit 3b kann separat angeordnet oder Bestandteil des ersten Bremssteuergeräts 3 sein. Die Verarbeitungseinheit 3b weist beispielsweise eine Verarbeitungslogik auf und erzeugt ein Ansteuerungssignal für das Schaltventil 8. Das Ansteuerungssignal wird dem Antrieb 8a des Schaltventils 8 über die Steuerleitung 3c bereitgestellt.

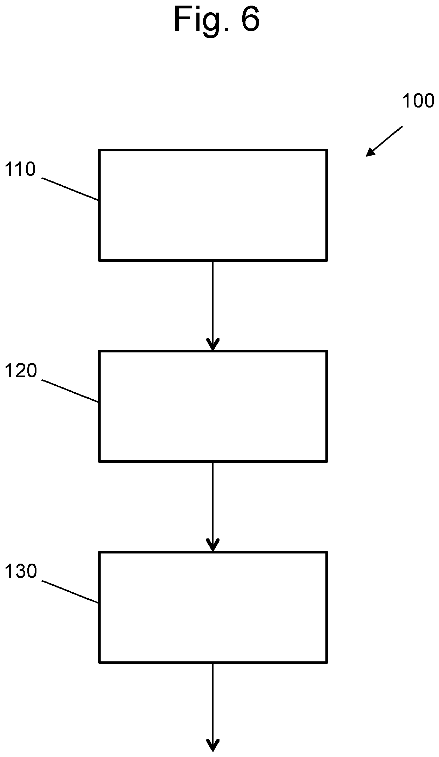

**Figur 6** stellt ein schematisches Flussdiagramm eines erfindungsgemäßen Verfahrens 100 zum Steuern der Bremssteuergeräteanordnung 1 dar.

In einem ersten Verfahrensschritt 110 wird die Luftleitung 2 in einer ersten Betriebsstellung der Bremssteuergeräteanordnung 1 als Hauptluftleitung (HL) mit einem ersten Druck p_{HL} von ≤ 5 bar betrieben. Das Schaltventil 8 ist ausgeschaltet und verbindet einen HL-Eingangsanschluss des zweiten Bremssteuergerätes 4 mit der Luftleitung 2. Das zweite Bremssteuergerät 4 kommuniziert mit dem ersten Bremssteuergerät 3 und steuert dies derart, dass eine klassische HL-Steuerung mit dem zweiten Bremssteuergerät 4 ausgeführt wird.

In einem zweiten Verfahrensschritt 120 wird das Schaltventil 8 eingeschaltet und verstellt die Bremssteuergeräteanordnung 1 aus der ersten Betriebsstellung in eine zweite Betriebsstellung. Die Luftleitung 2 wird als Hauptluftbehälterleitung (HBL) mit einem zweiten, konstanten Druck p_{HBL} von ca. 10 bar betrieben. Der HL-Eingangsanschluss des zweiten Bremssteuergerätes 4 wird von der Luftleitung 2 getrennt und über das Druckbegrenzungsventil 7 mit dem Luftbehälter 5 verbunden. Das erste Bremssteuergerät 3 kommuniziert mit der Luftleitung 2. Damit entspricht die zweite Betriebsstellung einer Arbeitsstellung einer so genannten 1-Leitungs-ep(elektro-pneumatischen)-Bremse, wobei eine direkte ep-Bremsensteuerung mit dem ersten Bremssteuergerät 3 ausgeführt wird.

In einem dritten Verfahrensschritt 130 wird das Schaltventil 8 wieder ausgeschaltet und verstellt die Bremssteuergeräteanordnung 1 aus der zweiten Betriebsstellung zurück in die erste Betriebsstellung. Der HL-Eingangsanschluss des zweiten Bremssteuergerätes 4 mit dem Luftbehälter 5 wird unterbrochen und mit der Luftleitung 2 verbunden.

Die Erfindung ist durch das oben angegebene Ausführungsbeispiel nicht eingeschränkt, sondern im Rahmen der Ansprüche modifizierbar.

So ist z.B. denkbar, dass die Bremse mit der erfindungsgemäßen Bremssteuergeräteanordnung 1 auch für Reisezugwagen/Personenzugwagen oder für Triebfahrzeuge verwendet werden kann.

### Bezugszeichenliste

- 1: Bremssteuergeräteanordnung
- 2: Luftleitung
- 3: Erstes Bremssteuergerät
- 3a: Leitung
- 3b: Verarbeitungseinheit
- 3c: Steuerleitung
- 4: Zweites Bremssteuergerät
- 4a, 4b, 4c, 4d: Leitung
- 5: Luftbehälter
- 5a: Leitung
- 6: Rückschlagventil
- 7: Reduzierventil
- 7a, 7b: Leitung
- 8: Schaltventil
- 8a: Antrieb
- 8b, 8c: Leitung
- 8-1: Eingangsanschluss
- 8-2, 8-3: Arbeitsanschluss
- 9: Drucksensor
- 9a: Leitung
- 10: Signalleitung
- 10a .: Anschlussleitung
- 11: Busleitung
- 11a, 11b: Anschlussleitung
- 12: Schnittstelle
- 12a: Anschlussleitung
- 100: Verfahren
- 110, 120, 130: Verfahrensschritt

## Patentansprüche

1. Bremssteuergeräteanordnung (1) einer Bremse für Schienenfahrzeuge, mit einer Luftleitung (2), einem ersten Bremssteuergerät (3), mindestens einem Luftbehälter (5), einem zweiten Bremssteuergerät (4), einem Druckbegrenzungsventil (7) und einem Schaltventil (8), wobei das zweite Bremssteuergerät (4) mit dem ersten Bremssteuergerät (3) kommuniziert
**dadurch gekennzeichnet, dass**
a) die Luftleitung (2) in einer ersten Betriebsstellung der Bremssteuergeräteanordnung (1) als Hauptluftleitung (HL) mit einem ersten Druck (p_{HL}) von ≤ 5 bar betrieben ist, wenn das zweite Bremssteuergerät (4) mit der Luftleitung (2) durch das ausgeschaltete Schaltventil (8) verbunden ist, und das erste Bremssteuergerät (3) durch das zweite Bremssteuergerät (4) derart gesteuert ist, dass eine klassische HL-Steuerung mit dem zweiten Bremssteuergerät (4) gebildet ist;
b) die Luftleitung (2) in einer zweiten Betriebsstellung der Bremssteuergeräteanordnung (1) als Hauptluftbehälterleitung (HBL) mit einem zweiten, konstanten Druck (p_{HBL}) von ca. 10 bar betrieben ist, wenn die Bremssteuergeräteanordnung (1) aus der ersten Betriebsstellung in die zweite Betriebsstellung durch das eingeschaltete Schaltventil (8) verstellt ist, wobei die Verbindung des zweiten Bremssteuergerätes (4) mit der Luftleitung (2) unterbrochen und das zweite Bremssteuergerät (4) über das Druckbegrenzungsventil (7) mit dem Luftbehälter (5) verbunden ist, und wobei das erste Bremssteuergerät (3) mit der Luftleitung (2) kommuniziert und eine direkte ep-Bremsensteuerung ausführt; und
c) die Bremssteuergeräteanordnung (1) aus der zweiten Betriebsstellung zurück in die erste Betriebsstellung durch das ausgeschaltete Schaltventil (8) verstellbar ist, wobei die Luftleitung (2) wieder in der ersten Betriebsstellung der Bremssteuergeräteanordnung (1) als Hauptluftleitung (HL) mit dem ersten Druck (p_{HL}) von ≤ 5 bar betrieben ist.

2. Bremssteuergeräteanordnung (1) nach Anspruch 1, **dadurch gekennzeichnet, dass** das zweite Bremssteuergerät (4) mit dem ersten Bremssteuergerät (3) über eine Leitung (4d) verbunden ist, über welche das zweite Bremssteuergerät (4) mit dem ersten Bremssteuergerät (3) pneumatisch oder/und elektrisch kommuniziert.

3. Bremssteuergeräteanordnung (1) nach Anspruch 1 oder 2, **dadurch gekennzeichnet, dass** das zweite Bremssteuergerät (4) mit Arbeitsanschlüssen (8-2, 8-3) des Schaltventils (8) und mit dem Druckbegrenzungsventil (7) verbunden ist, wobei das Schaltventil (8) mit einem Eingangsanschluss (8-1) mit der Luftleitung (2) verbunden ist.

4. Bremssteuergeräteanordnung (1) nach einem der vorhergehenden Ansprüche, **dadurch gekennzeichnet, dass** die Bremssteuergeräteanordnung (1) aus einer ersten Betriebsstellung, in welcher die Luftleitung (2) mit einem ersten Druck (p_{HL}) betrieben wird, in eine zweite Betriebsstellung, in welcher die Luftleitung (2) mit einem zweiten Druck (p_{HBL}) betrieben wird, der zu dem ersten Druck unterschiedlich ist, mittels des Schaltventils (8) verstellbar ist.

5. Bremssteuergeräteanordnung (1) nach Anspruch 4, **dadurch gekennzeichnet, dass** das Schaltventil (8) in der ersten Betriebsstellung ausgeschaltet ist, und dass das Schaltventil (8) in der zweiten Betriebsstellung eingeschaltet ist.

6. Bremssteuergeräteanordnung (1) nach Anspruch 5, **dadurch gekennzeichnet, dass** in der zweiten Betriebsstellung ein HL-Eingangsdruck-Anschluss des zweiten Bremssteuergeräts (4) über die Arbeitsanschlüsse (8-2, 8-3) des Schaltventils (8) mit einem Druck beaufschlagt ist, wobei das zweite Bremssteuergerät (4) inaktiv ist.

7. Bremssteuergeräteanordnung (1) nach Anspruch 6, **dadurch gekennzeichnet, dass** der HL-Eingangsdruck-Anschluss des zweiten Bremssteuergeräts (4) in der zweiten Betriebsstellung über das Druckbegrenzungsventil (7) mit dem Luftbehälter (5) verbunden ist.

8. Bremssteuergeräteanordnung (1) nach einem der Ansprüche 6 bis 7, **dadurch gekennzeichnet, dass** in der ersten Betriebsstellung der HL-Eingangsdruck-Anschluss des zweiten Bremssteuergeräts (4) über die Arbeitsanschlüsse (8-1, 8-2) des Schaltventils (8) mit der Luftleitung (2) verbunden ist, wobei das zweite Bremssteuergerät (4) aktiv ist.

9. Bremssteuergeräteanordnung (1) nach einem der vorhergehenden Ansprüche, **dadurch gekennzeichnet, dass** das Schaltventil (8) einen elektromagnetischen Antrieb oder/und einen pneumatischen Antrieb aufweist.

10. Bremssteuergeräteanordnung (1) nach einem der vorhergehenden Ansprüche, **dadurch gekennzeichnet, dass** das Schaltventil (8) ein 3/2-WegeVentil ist.

11. Bremssteuergeräteanordnung (1) nach einem der vorhergehenden Ansprüche, **dadurch gekennzeichnet, dass** die Bremse eine Güterwagenbremse oder eine Reisezugwagenbremse ist.

12. Bremssteuergeräteanordnung (1) nach einem der vorhergehenden Ansprüche, **dadurch gekennzeichnet, dass** das Schaltventil (8) in Ausführung als Magnetventil von einer führenden Einheit direkt über eine separate Steuerleitung (10) oder/und über eine Busleitung (11) über eine Schnittstelle (12) oder/und über die Busleitung (11) über das erste Bremssteuergerät (3) angesteuert ist.

13. Bremssteuergeräteanordnung (1) nach einem der Ansprüche 1 bis 11, **dadurch gekennzeichnet, dass** das Schaltventil (8) in Ausführung als Magnetventil von dem ersten Bremssteuergerät (3), welches mit einem mit der Luftleitung (2) kommunizierenden Drucksensor (9) verbunden ist, in Abhängigkeit von dem aktuellen Druck der Luftleitung (2) angesteuert ist.

14. Verfahren (100) zum Steuern einer Bremssteuergeräteanordnung (1) einer Bremse für Schienenfahrzeuge mit einer Luftleitung (2), wobei die Bremssteuergeräteanordnung (1) ein erstes Bremssteuergerät (3), ein zweites Bremssteuergerät (4), ein Druckbegrenzungsventil (7), ein Schaltventil (8) und mindestens einen Luftbehälter (5) aufweist,
**gekennzeichnet durch** die Verfahrensschritte
(110) Betreiben der Luftleitung (2) in einer ersten Betriebsstellung der Bremssteuergeräteanordnung (1) als Hauptluftleitung (HL) mit einem ersten Druck (p_{HL}) von ≤ 5 bar, Verbinden des zweiten Bremssteuergerätes (4) mit der Luftleitung (2) durch Ausschalten des Schaltventils (8), und Steuern des ersten Bremssteuergerätes (3) durch das zweite Bremssteuergerät (4) derart, dass eine klassische HL-Steuerung mit dem zweiten Bremssteuergerät (4) ausgeführt wird;
(120) Betreiben der Luftleitung (2) in einer zweiten Betriebsstellung der Bremssteuergeräteanordnung (1) als Hauptluftbehälterleitung (HBL) mit einem zweiten, konstanten Druck (p_{HBL}) von ca. 10 bar, Verstellen der Bremssteuergeräteanordnung (1) aus der ersten Betriebsstellung in die zweite Betriebsstellung durch Einschalten des Schaltventils (8), wobei die Verbindung des zweiten Bremssteuergerätes (4) mit der Luftleitung (2) unterbrochen wird und das zweite Bremssteuergerät (4) über das Druckbegrenzungsventil (7) mit dem Luftbehälter (5) verbunden wird, und wobei das erste Bremssteuergerät (3) mit der Luftleitung (2) kommuniziert und eine direkte ep-Bremsensteuerung ausführt;
(130) Verstellen der Bremssteuergeräteanordnung (1) aus der zweiten Betriebsstellung zurück in die erste Betriebsstellung durch Ausschalten des Schaltventils (8), wobei wieder ein Betreiben der Luftleitung (2) in der ersten Betriebsstellung der Bremssteuergeräteanordnung (1) als Hauptluftleitung (HL) mit dem ersten Druck (p_{HL}) von ≤ 5 bar erfolgt.

## Claims

1. Assembly (1) of brake control appliances of a brake for rail vehicles, with an air duct (2), a first brake control appliance (3), at least one air container (5), a second brake control appliance (4), a pressure-limiting valve (7) and a switch valve (8), wherein the second brake control appliance (4) communicates with the first brake control appliance (3),
**characterised in that**
a) the air duct (2) is operated in a first operating position of the assembly (1) of brake control appliances as a main air duct (HL) with a first pressure
(p_{HL}) of ≤ 5 bar when the second brake control appliance (4) is connected to the air duct (2) by the switched-off switch valve (8), and the first brake control appliance (3) is controlled by the second brake control appliance (4) in such a way that a conventional HL control is formed with the second brake control appliance (4);
b) the air duct (2) is operated in a second operating position of the assembly (1) of brake control appliances as a main air container duct (HBL) with a second, constant pressure (p_{HBL}) of approx. 10 bar when the assembly (1) of brake control appliances is moved from the first operating position to the second operating position by the switched-on switch valve (8), wherein the connection of the second brake control appliance (4) to the air duct (2) is interrupted and the second brake control appliance (4) is connected to the air container (5) via the pressure-limiting valve (7), and wherein the first brake control appliance (3) communicates with the air duct (2) and performs a direct ep brake control; and the assembly (1) of brake control appliances can be moved from the second operating position back into the first operating position by the switched-off switch valve (8), wherein the air duct (2) is again operated in the first operating position of the assembly (1) of brake control appliances as the main air duct (HL) with the first pressure (p_{HL}) of ≤ 5 bar.

2. Assembly (1) of brake control appliances according to claim 1, **characterised in that** the second brake control appliance (4) is connected to the first brake control appliance (3) via a line (4d) via which the second brake control appliance (4) communicates pneumatically or/and electrically with the first brake control appliance (3).

3. Assembly (1) of brake control appliances according to claim 1 or 2, **characterised in that** the second brake control appliance (4) is connected to working terminals (8-2, 8-3) of the switch valve (8) and to the pressure-limiting valve (7), wherein the switch valve (8) is connected to the air duct (2) via an inlet terminal (8-1).

4. Assembly (1) of brake control appliances according to any one of the preceding claims, **characterised in that** the assembly (1) of brake control appliances can be moved by means of the switch valve (8) from a first operating position in which the air duct (2) is operated at a first pressure (p_{HL}) to a second operating position in which the air duct (2) is operated at a second pressure (p_{HBL}) that is different from the first pressure.

5. Assembly (1) of brake control appliances according to claim 4, **characterised in that** the switch valve (8) is switched off in the first operating position and the switch valve (8) is switched on in the second operating position.

6. Assembly (1) of brake control appliances according to claim 5, **characterised in that**, in the second operating position, an HL input pressure terminal of the second brake control appliance (4) is pressurised via the working terminals (8-2, 8-3) of the switch valve (8), wherein the second brake control appliance (4) is inactive.

7. Assembly (1) of brake control appliances according to claim 6, **characterised in that** the HL inlet pressure terminal of the second brake control appliance (4) is connected in the second operating position to the air container (5) via the pressure-limiting valve (7).

8. Assembly (1) of brake control appliances according to any one of claims 6 to 7, **characterised in that**, in the first operating position, the HL inlet pressure terminal of the second brake control appliance (4) is connected to the air duct (2) via the working terminals (8-1, 8-2) of the switch valve (8), wherein the second brake control appliance (4) is active.

9. Assembly (1) of brake control appliances according to any one of the preceding claims, **characterised in that** the switch valve (8) has an electromagnetic drive or/and a pneumatic drive.

10. Assembly (1) of brake control appliances according to any one of the preceding claims, **characterised in that** the switch valve (8) is a 3/2-way valve.

11. Assembly (1) of brake control appliances according to any one of the preceding claims, **characterised in that** the brake is a freight wagon brake or a passenger coach brake.

12. Assembly (1) of brake control appliances according to any one of the preceding claims, **characterised in that** the switch valve (8), when configured as a solenoid valve, is actuated by a leading unit directly via a separate control line (10) or/and via a bus line (11) via an interface (12) or/and via the bus line (11) via the first brake control appliance (3).

13. Assembly (1) of brake control appliances according to any one of claims 1 to 11, **characterised in that** the switch valve (8), when configured as a solenoid valve, is actuated by the first brake control appliance (3), which is connected to a pressure sensor (9) communicating with the air duct (2), depending on the current pressure of the air duct (2).

14. Method (100) for controlling an assembly (1) of brake control appliances of a brake for rail vehicles, with an air duct (2), wherein the assembly (1) of brake control appliances has a first brake control appliance (3), a second brake control appliance (4), a pressure-limiting valve (7), a switch valve (8) and at least one air container (5),
**characterised by** the method steps of
(110) operating the air duct (2) in a first operating position of the assembly (1) of brake control appliances as a main air duct (HL) with a first pressure (p_{HL}) of ≤ 5 bar, connecting the second brake control appliance (4) to the air duct (2) by switching off the switch valve (8), and controlling the first brake control appliance (3) by the second brake control appliance (4) in such a way that a conventional HL control is performed with the second brake control appliance (4);
(120) operating the air duct (2) in a second operating position of the assembly (1) of brake control appliances as a main air container duct (HBL) with a second, constant pressure (p_{HBL}) of approx. 10 bar, moving the assembly (1) of brake control appliances from the first operating position to the second operating position by switching on the switch valve (8), wherein the connection of the second brake control appliance (4) to the air duct (2) is interrupted and the second brake control appliance (4) is connected to the air container (5) via the pressure-limiting valve (7), and wherein the first brake control appliance (3) communicates with the air duct (2) and performs a direct ep brake control;
(130) moving the assembly (1) of brake control appliances from the second operating position back into the first operating position by switching off the switch valve (8), wherein the air duct (2) is again operated in the first operating position of the assembly (1) of brake control appliances as the main air duct (HL) with the first pressure (p_{HL}) of ≤ 5 bar.

## Revendications

1. Ensemble d'appareils de commande de freinage (1) d'un frein pour véhicules ferroviaires avec une conduite d'air (2), un premier appareil de commande de freinage (3), au moins un réservoir d'air (5), un second appareil de commande de freinage (4), une vanne de limitation de pression (7) et une vanne de commutation (8), dans lequel le second appareil de commande de freinage (4) communique avec le premier appareil de commande de freinage (3)
**caractérisé en ce que**
a) la conduite d'air (2), dans une première position de fonctionnement de l'ensemble d'appareils de commande de freinage (1), est utilisée en tant que conduite d'air principale (HL) avec une première pression (
p_{HL}) de ≤ 5 bars lorsque le second appareil de commande de freinage (4) est raccordé à la conduite d'air (2) par la vanne de commutation (8) désactivée, et le premier appareil de commande de freinage (3) est commandé par le second appareil de commande de frein (4) de sorte qu'une commande HL classique soit formée avec le second appareil de commande de freinage (4) ;
b) la conduite d'air (2), dans une seconde position de fonctionnement de l'ensemble d'appareils de commande de freinage (1), fonctionne en tant que conduite de réservoir d'air principal (HBL) avec une seconde pression constante (p_{HBL}) d'env. 10 bars lorsque l'ensemble d'appareils de commande de freinage (1) est ajusté de la première position de fonctionnement à la seconde position de fonctionnement par la vanne de commutation (8) activée, dans lequel le raccordement du second appareil de commande de freinage (4) avec la conduite d'air (2) est interrompue et le second appareil de commande de freinage (4) est raccordé au réservoir d'air (5) par l'intermédiaire de la vanne de limitation de pression (7), et dans lequel le premier appareil de commande de freinage (3) communique avec la conduite d'air (2) et exécute une commande de freinage ep directe ; et c) l'ensemble d'appareils de commande de freinage (1) peut être réajusté de la seconde position de fonctionnement à la première position de fonctionnement par la vanne de commutation (8) désactivée, dans lequel la conduite d'air (2) fonctionne de nouveau dans la première position de fonctionnement de l'ensemble d'appareils de commande de freinage (1) en tant que conduite d'air principale (HL) avec la première pression (p_{HL}) de ≤ 5 bars.

2. Ensemble d'appareils de commande de freinage (1) selon la revendication 1, **caractérisé en ce que** le second appareil de commande de freinage (4) est raccordé au premier appareil de commande de freinage (3) par l'intermédiaire d'une conduite (4d), par l'intermédiaire de laquelle le second appareil de commande de freinage (4) communique avec le premier appareil de commande de freinage (3) de manière pneumatique et/ou électrique.

3. Ensemble d'appareils de commande de freinage (1) selon la revendication 1 ou 2, **caractérisé en ce que** le second appareil de commande de freinage (4) est raccordé à des raccords de travail (8-2, 8-3) de la vanne de commutation (8) et à la vanne de limitation de pression (7), dans lequel la vanne de commutation (8) est raccordée à la conduite d'air (2) avec un raccord d'entrée (8-1).

4. Ensemble d'appareils de commande de freinage (1) selon l'une quelconque des revendications précédentes, **caractérisé en ce que** l'ensemble d'appareils de commande de freinage (1) peut être ajusté d'une première position de fonctionnement, dans laquelle la conduite d'air (2) fonctionne à une première pression (p_{HL}), à une seconde position de fonctionnement, dans laquelle la conduite d'air (2) fonctionne à une seconde pression (p_{HBL}) qui est différente de la première pression, au moyen de la vanne de commutation (8).

5. Ensemble d'appareils de commande de freinage (1) selon la revendication 4, **caractérisé en ce que** la vanne de commutation (8) est désactivée dans la première position de fonctionnement, et **en ce que** la vanne de commutation (8) est activée dans la seconde position de fonctionnement.

6. Ensemble d'appareils de commande de freinage (1) selon la revendication 5, **caractérisé en ce que**, dans la seconde position de fonctionnement, un raccord de pression d'entrée HL du second appareil de commande de freinage (4) est alimenté en pression par l'intermédiaire des raccords de travail (8-2, 8-3) de la vanne de commutation (8), dans lequel le second appareil de commande de freinage (4) est inactif.

7. Ensemble d'appareils de commande de freinage (1) selon la revendication 6, **caractérisé en ce que** le raccord de pression d'entrée HL du second appareil de commande de freinage (4) est raccordé au réservoir d'air (5) par l'intermédiaire de la vanne de limitation de pression (7) dans la seconde position de fonctionnement.

8. Ensemble d'appareils de commande de freinage (1) selon l'une quelconque des revendications 6 à 7, **caractérisé en ce que**, dans la première position de fonctionnement, le raccord de pression d'entrée HL du second appareil de commande de freinage (4) est raccordé à la conduite d'air (2) par l'intermédiaire des raccords de travail (8-1, 8-2) de la vanne de commutation (8), dans lequel le second appareil de commande de freinage (4) est actif.

9. Ensemble d'appareils de commande de freinage (1) selon l'une quelconque des revendications précédentes, **caractérisé en ce que** la vanne de commutation (8) présente un entraînement électromagnétique et/ou un entraînement pneumatique.

10. Ensemble d'appareils de commande de freinage (1) selon l'une quelconque des revendications précédentes, **caractérisé en ce que** la vanne de commutation (8) est une vanne 3/2 voies.

11. Ensemble d'appareils de commande de freinage (1) selon l'une quelconque des revendications précédentes, **caractérisé en ce que** le frein est un frein de wagon de marchandises ou un frein de voiture de voyageurs.

12. Ensemble d'appareils de commande de freinage (1) selon l'une quelconque des revendications précédentes, **caractérisé en ce que** la vanne de commutation (8), lorsqu'elle est conçue en tant qu'électrovanne, est commandée par l'intermédiaire d'une unité de guidage directement par l'intermédiaire d'une ligne de commande séparée (10) et/ou par l'intermédiaire d'une ligne de bus (11) par l'intermédiaire d'une interface (12) et/ou par l'intermédiaire de la ligne de bus (11) par l'intermédiaire du premier appareil de commande de freinage (3).

13. Ensemble d'appareils de commande de freinage (1) selon l'une quelconque des revendications 1 à 11, **caractérisé en ce que** la vanne de commutation (8), lorsqu'elle est conçue en tant qu'électrovanne, est commandée par le premier appareil de commande de freinage (3) qui est raccordé à un capteur de pression (9) communiquant avec la conduite d'air (2) en fonction de la pression actuelle de la conduite d'air (2).

14. Procédé (100) pour commander un ensemble d'appareils de commande de freinage (1) d'un frein pour véhicules ferroviaires avec une conduite d'air (2), dans lequel l'ensemble d'appareils de commande de freinage (1) présente un premier appareil de commande de freinage (3), un second appareil de commande de freinage (4), une vanne de limitation de pression (7), une vanne de commutation (8) et au moins un réservoir d'air (5),
**caractérisé par** les étapes de procédé de
(110) fonctionnement de la conduite d'air (2) dans une première position de fonctionnement de l'ensemble d'appareils de commande de freinage (1) en tant que conduite d'air principale (HL) avec une première pression (p_{HL}) de ≤ 5 bars, raccordement du second appareil de commande de freinage (4) à la conduite d'air (2) en désactivant la vanne de commutation (8), et commande du premier appareil de commande de freinage (3) par le second appareil de commande de freinage (4) de sorte qu'une commande HL classique soit effectuée avec le second appareil de commande de freinage (4) ;
(120) fonctionnement de la conduite d'air (2) dans une seconde position de fonctionnement de l'ensemble d'appareils de commande de freinage (1) en tant que conduite de réservoir d'air principale (HBL) avec une seconde pression constante (p_{HBL}) d'env. 10 bars, ajustement de l'ensemble d'appareils de commande de freinage (1) de la première position de fonctionnement à la seconde position de fonctionnement en activant la vanne de commutation (8), dans lequel le raccordement du second appareil de commande de freinage (4) à la conduite d'air (2) est interrompu et le second appareil de commande de freinage (4) est raccordé au réservoir d'air (5) par l'intermédiaire de la vanne de limitation de pression (7), et dans lequel le premier appareil de commande de freinage (3) communique avec la conduite d'air (2) et exécute une commande de freinage ep directe ;
(130) ajustement de l'ensemble d'appareils de commande de freinage (1) de la seconde position de fonctionnement à la première position de fonctionnement en désactivant la vanne de commutation (8), dans lequel un fonctionnement de la conduite d'air (2) dans la première position de fonctionnement de l'ensemble d'appareils de commande de freinage (1) est de nouveau effectué en tant que conduite d'air principale (HL) avec la première pression (p_{HL}) de ≤ 5 bars.
